# EUROPÄISCHE PATENTSCHRIFT

(11) **EP 1 348 326 B1**
(45) Veröffentlichungstag und Bekanntmachung des Hinweises auf die Patenterteilung: **07.03.2007**
(21) Anmeldenummer: 03100635.6
(22) Anmeldetag: 13.03.2003
(51) Int. Cl.: A01C 7/04, A01C 7/08

(54) **Saemaschine und pneumatische Kupplung**
Seeder and pneumatic coupling
Semoir et couplage pneumatique

(30) Priorität: 26.03.2002 US 106622
(43) Veröffentlichungstag der Anmeldung: 01.10.2003
(73) Patentinhaber: DEERE & COMPANY, Moline, Illinois 61265-8098 (US)
(72) Erfinder: McCartney, Scott Charles, 52807, Davenport (US); Martin, Robert Wallace, 52748, Parkview (US); Mariman, Nathan Albert, 61254, Geneseo (US); Landphair, Donald Keith, 52722, Bettendorf (US)
(74) Vertreter: Holst, Sönke

(56) Entgegenhaltungen:
- EP-A- 0 160 370
- EP-A- 0 620 963
- FR-A- 2 751 833
- US-A- 5 515 795
- US-B1- 6 308 646

## Beschreibung

Die Erfindung betrifft eine Sämaschine mit einem sich quer zur Bewegungsrichtung erstreckenden Werkzeugträger, an dem eine Mehrzahl an Säeinheiten angebracht sind, einer Luftpumpe, die pneumatisch mit einem Luftdruckverzweiger gekoppelt ist, der wiederum über jeweils eine pneumatische Kupplung luftdruckleitend mit Messsystemen der Säeinheiten koppelbar ist wobei die Kupplung ein hohles Rohr mit einem inneren Abschnitt und einem äußeren Abschnitt umfasst.

Landwirtschaftliche Sämaschinen verwenden Luftdruck, um Saatgut und landwirtschaftliche Chemikalien abzumessen und zu transportieren. Pneumatische Messsysteme an Reihenpflanzgeräten lassen sich grundsätzlich in zwei Kategorien unterteilen. Bei einer Kategorie wird positiver Luftdruck, d. h. Luftdruck, der größer ist als der Umgebungsluftdruck, verwendet, um das Saatgut abzumessen. Bei der anderen Kategorie wird negativer Luftdruck, d. h. Luftdruck, der kleiner als der Umgebungsluftdruck ist, verwendet, um das Saatgut abzumessen. Eine Luftpumpe wird benutzt, um den positiven oder negativen Luftdruck zu erzeugen. Die Luftpumpe kann pneumatisch mit einem Luftdruckverzweiger gekoppelt sein. Der Luftdruckverzweiger ist wiederum durch je einen Luftschlauch mit den einzelnen Messsystemen gekoppelt. Es ist bekannt, den sich quer erstreckenden Balken oder Werkzeugträger abzudichten, um den Luftdruckverzweiger zu bilden. Bei einer gegenwärtig am Markt erhältlichen landwirtschaftlichen Sämaschine sind die pneumatischen Verbindungsstücke aus Metall und an den Werkzeugträger angeschweißt.

Die US 6 308 646 B beschreibt eine Sämaschine mit Säeinheiten, die durch einen Schlauch mit einem Luftverteiler verbunden sind. Der Schlauch ist in eine Hülse eingesteckt, die wiederum auf einen Stutzen des Luftverteilers gesteckt ist.

Das der Erfindung zu Grunde liegende Problem wird darin gesehen, eine pneumatische Kupplung für eine landwirtschaftliche Sämaschine bereitzustellen, die leicht zusammengesetzt und an der Sämaschine installiert werden kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung schlägt eine pneumatische Kupplung vor, die ein hohles Rohr umfasst, das einen inneren Abschnitt und einen äußeren Abschnitt hat, die durch einen sich radial erstreckenden Flansch voneinander getrennt sind. Der sich radial erstreckende Flansch hat eine innere und eine äußere Oberfläche. Die innere Oberfläche grenzt an den inneren Abschnitt des hohlen Rohrs und die äußere Oberfläche grenzt an den äußeren Abschnitt des hohlen Rohrs. Ein torusförmiger, federnder und zusammendrückbarer Dichtungsring liegt an der inneren Oberfläche des Flansches an. Der innere Abschnitt des Rohrs ist mit sich radial nach außen erstreckenden, federnden Klinken oder Klauen versehen, die in der Regel einteilig mit dem inneren Abschnitt geformt sind.

Die erfindungsgemäße Kupplung wird an einem Luftdruckverzweiger einer landwirtschaftlichen Sämaschine befestigt. Der Luftdruckverzweiger hat ein hohles Inneres, das durch eine innere Oberfläche definiert wird, und ein Äußeres, das durch eine äußere Oberfläche definiert wird. In dem Luftdruckverzweiger sind Öffnungen zur Aufnahme der Kupplung bzw. Kupplungen geformt. Der innere Abschnitt des hohlen Rohrs wird in eine zugehörige Öffnung eingeführt, so dass die sich radial erstreckenden Klinken an der benachbarten inneren Oberfläche des Verzweigers anliegen. Der Dichtungsring wird zwischen der inneren Oberfläche des sich radial erstreckenden Flansches und der äußeren Oberfläche des Luftdruckverzweigers zusammengedrückt. Der Dichtungsring bildet zum Einen eine luftdichte Dichtung zwischen dem Dichtungsring und der äußeren Oberfläche des Luftdruckverzweigers und zum Anderen zwischen der inneren Oberfläche des sich radial erstreckenden Flansches und dem Dichtungsring. In der Regel sind alle Säeinheiten der Sämaschine durch die beschriebenen Kupplungen mit dem Luftdruckverzweiger gekoppelt.

Auf diese Weise erhält man eine einfach und preiswert aufgebaute Kupplung, die leicht angebracht werden kann.

Die Klinken erstrecken sich vorzugsweise von sich axial erstreckenden, federnden Zungen radial nach außen.

Das hohle Rohr und der Flansch sind vorzugsweise einteilig hergestellt, beispielsweise durch Drehen oder Gießen. Sie sind zweckmäßigerweise aus Kunststoff, z. B. Nylon, gefertigt.

Eine Luftpumpe ist pneumatisch mit dem Luftdruckverzweiger gekoppelt, um darin einen gewünschten Luftdruck (Über- oder Unterdruck) aufrecht zu erhalten. Einzelne Luftschläuche erstrecken sich von den äußeren Abschnitten der hohlen Rohre bis zu den einzelnen Messsystemen.

In der dargestellten Ausführungsform wird der Luftdruckverzweiger gebildet, indem die Enden des sich quer zur Arbeitsrichtung erstreckenden Haupt- oder Werkzeugträgers abgedichtet werden.

In den Zeichnungen ist ein nachfolgend näher beschriebenes Ausführungsbeispiel der Erfindung dargestellt. Es zeigt:

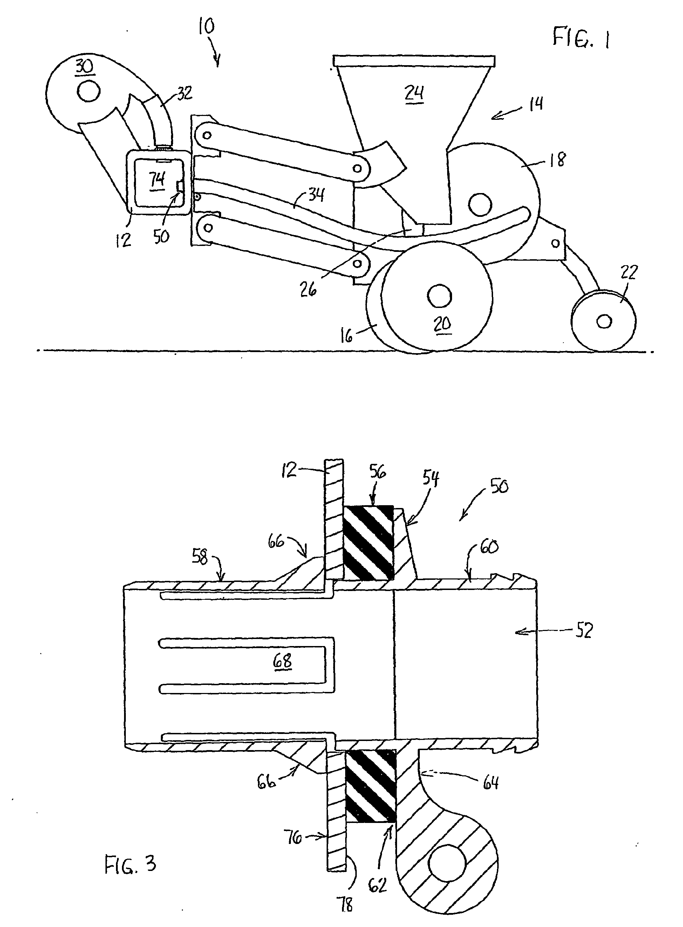

- Fig. 1: eine schematische Ansicht eines landwirtschaftlichen Sägeräts, an dem eine erfindungsgemäße Kupplung verwendet wird,

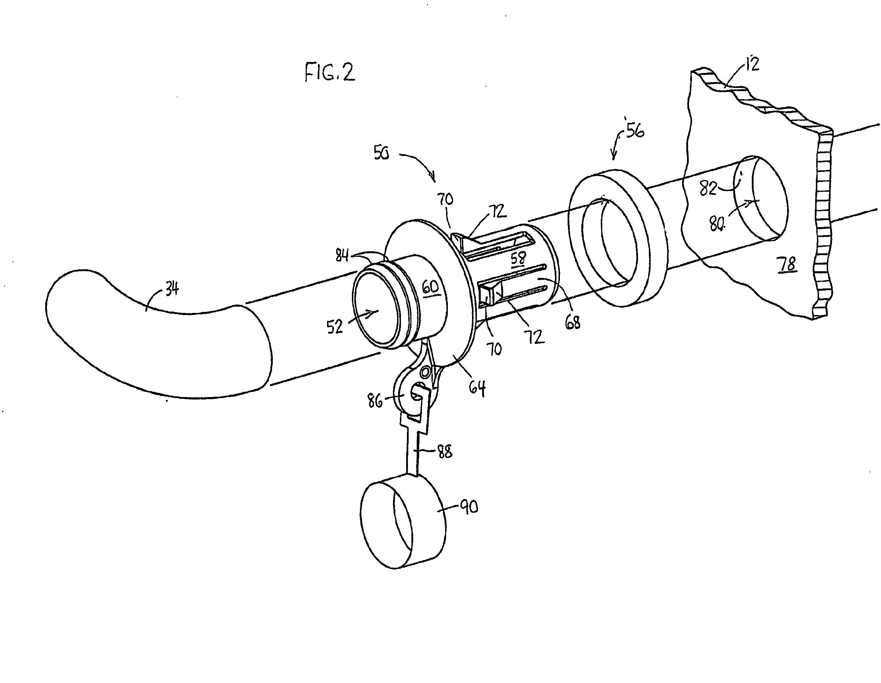

- Fig. 2: eine perspektivische Explosionsansicht der pneumatischen Kupplung und,
- Fig. 3: eine Querschnittsansicht der pneumatischen Kupplung.

Eine Sämaschine 10 umfasst einen sich quer erstreckenden Hauptträger oder Werkzeugträger 12, der mit einer Mehrzahl einzelner Pflanz- oder Säeinheiten 14 ausgestattet ist. Jede Säeinheit 14 umfasst einen Furchenöffner 16, um eine Furche zum Einbringen des Saatguts zu erstellen, und ein Messsystem 18. Mit der Säeinheit 14 verbundene Tiefeneinstellräder 20 steuern die Tiefe der vom Furchenöffner 16 geformten Pflanzfurche.

Schließräder 22 schließen die Pflanzfurche, nachdem das Saatgut in der Pflanzfurche abgelegt wurde. Das auszubringende Saatgut ist im Saatgutbehälter 24 enthalten, der das Saatgut dem Messsystem 18 zuführt. Der Saatgutbehälter 24 könnte ein Saatgutbehälter voller Größe oder ein kleinerer Behälter sein, der von einem zentralen Saatgutbehälter auf Anfrage durch ein Saatgutliefersystem mit Saatgut versorgt wird. Das abgemessene Saatgut wird in ein Saatgutrohr 26 abgegeben, das es in die Pflanzfurche abgibt. Das dargestellte Messsystem 18 ist ein Vakuummesssystem, in dem negativer Luftdruck verwendet wird, Saatgut abzumessen. Obwohl die dargestellte Ausführungsform ein Vakuummesssystem ist, könnte die vorliegende Erfindung auch an mit Überdruck arbeitenden pneumatischen Messsystemen verwendet werden.

Eine Luftpumpe 30 ist durch eine Luftleitung 32 pneumatisch mit dem sich quer erstreckenden Werkzeugträger 12 gekoppelt. Der Werkzeugträger 12 ist abgedichtet und bildet einen Luftdruckverzweiger. Obwohl der Werkzeugträger 12 in der dargestellten Ausführungsform den Luftdruckverzeiger bildet, könnten auch andere abgedichtete, hohle Körper als Luftdruckverzweiger verwendet werden. Der Luftdruckverzweiger ist pneumatisch durch einen Luftschlauch 34 mit dem Messsystem 18 gekoppelt. Der Luftschlauch 34 ist durch eine pneumatische Kupplung 50 mit dem Werkzeugträger 12 gekoppelt.

Die pneumatische Kupplung 50 umfasst zwei Teile, ein hohles zylindrisches Rohr 52 mit einem sich radial erstreckenden kreisförmigen Flansch 54 und einem federnden, zusammendrückbaren Dichtungsring 56. Das hohle Rohr 52 umfasst einen inneren Abschnitt 58 und einen äußeren Abschnitt 60, die durch den sich radial erstreckenden Flansch 54 unterteilt sind. Das hohle Rohr 52 und der sich radial erstreckende Flansch 54 sind vorzugsweise ein einzelnes, integrales Nylonteil. Der sich radial erstreckende Flansch 54 ist mit einer inneren Oberfläche 62 ausgestattet, die am inneren Abschnitt 58 des hohlen Rohrs 52 anliegt, und mit einer äußeren Oberfläche 64, die am äußeren Abschnitt 60 des hohlen Rohrs 52 anliegt. Der federnde, zusammendrückbare Dichtungsring 56 ist torusförmig und passt über den inneren Abschnitt 58 des hohlen Rohrs 52, so dass er an der inneren Oberfläche 62 des sich radial erstreckenden Flansches 54 anliegt. Der innere Abschnitt 58 ist weiterhin mit sich radial erstreckenden Klinken 66 versehen, die sich von federnden Zungen 68 radial nach außen erstrecken. Die sich axial erstreckenden Zungen 68 sind im inneren Abschnitt 58 geformt. Die sich radial erstreckenden Klinken 66 haben eine Eingriffsoberfläche 70 und eine abgewinkelte, vorspannende Einführungsoberfläche 72.

Der Luftdruckverzweiger, der vom sich quer erstreckenden Werkzeugträger 12 gebildet wird, hat ein hohles Inneres 74, das von der inneren Oberfläche 76 des Werkzeugträgers 12 definiert wird. Der Werkzeugträger 12 ist auch mit einer äußeren Oberfläche 78 ausgestattet. Kreisförmige Öffnungen 80 sind zum Anbringen der pneumatischen Kupplung 50 in dem Werkzeugträger 12 geformt. Die pneumatische Kupplung 50 wird durch ein Einführen des inneren Abschnitts 58 in die jeweilige Öffnung 80 angebracht. Die vorspannenden Einführungsoberflächen 72 greifen an der Seitenwand 82 der Öffnung 80 an und spannen die Klinken 66 radial nach innen vor, bis die Klinken 66 die Seitenwand 82 der Öffnung 80 passiert haben. Die federnden Zungen 68 drücken die Klinken 66 radial nach außen, nachdem sie die Seitenwand 82 der Öffnung 80 passiert haben, so dass die Eingriffsoberflächen 70 mit der inneren Oberfläche 76 des Werkzeugträgers 12 in Berührung kommen. Die Entfernung zwischen den Eingriffsoberflächen 70 und der inneren Oberfläche 62 des sich radial erstreckenden Flansches 54 ist derart entworfen, dass die Wand des Werkzeugträgers 12 und der federnde, zusammendrückbare Dichtungsring 56 in einem zusammengedrückten Zustand aufgenommen werden. In seiner vollständig angebrachten Position ist der Dichtungsring 56 zwischen der inneren Oberfläche des sich radial erstreckenden Flansches 54 und der äußeren Oberfläche des Werkzeugträgers 12 zusammengedrückt und bildet eine luftdichte Dichtung zwischen diesen zwei Oberflächen. Der Luftschlauch 34 ist über den äußeren Abschnitt 60 des hohlen Rohrs 52 geschoben und kann durch Reibung oder durch eine Schlauchklemme festgehalten werden, falls zusätzliche Klemmkräfte erforderlich sind. Der äußere Abschnitt 60 ist mit zwei ringförmigen Rändelungen 84 versehen, die das Ergreifen des Luftschlauchs 34 unterstützen.

Die äußere Oberfläche des sich radial erstreckenden Flansches 54 ist mit einem Ring 54 versehen, an dem eine Fessel 88 mit einer integrierten Kappe 90 angebracht ist. Die Kappe 90 wird verwendet, die pneumatische Kupplung 50 abzudecken und sie vor äußeren Einflüssen zu schützen, wenn der Luftschlauch 34 nicht angebracht ist.

## Patentansprüche

1. Sämaschine (10) mit einem sich quer zur Bewegungsrichtung erstreckenden Werkzeugträger (12), an dem eine Mehrzahl an Säeinheiten (14) angebracht sind, einer Luftpumpe (30), die pneumatisch mit einem Luftdruckverzweiger gekoppelt ist, der wiederum über jeweils eine pneumatische Kupplung (50) luftdruckleitend mit Messsystemen (18) der Säeinheiten (14) koppelbar ist, wobei die Kupplung (50) ein hohles Rohr (52) mit einem inneren Abschnitt (58) und einem äußeren Abschnitt (60) umfasst, **dadurch gekennzeichnet, dass** zwischen dem inneren Abschnitt (58) und dem äußeren Abschnitt (60) der Kupplung (50) ein sich radial erstreckender Flansch (54) angeordnet ist, der eine innere Oberfläche (62) aufweist, die dem inneren Abschnitt (58) zugewandt ist und eine äußere Oberfläche (64), die dem äußeren Abschnitt (60) zugewandt ist, dass der innere Abschnitt (58) des Rohrs (52) sich im angekoppelten Zustand durch eine Öffnung (80) des Luftdruckverzweigers erstreckt, während der äußere Abschnitt (60) des Rohrs (52) pneumatisch mit dem Messsystem (18) verbindbar ist, dass im angekoppelten Zustand ein federnder, zusammendrückbarer Dichtungsring (56) zwischen der inneren Oberfläche (62) des Flansches (54) und der äußeren Oberfläche (78) des Luftdruckverzweigers angeordnet ist, und dass der innere Abschnitt (58) des Rohrs (52) mit sich nach außen erstreckenden Klinken (66) ausgestattet ist, die im angekoppelten Zustand an der inneren Oberfläche (76) des Luftdruckverzweigers angreifen und die Kupplung (50) am Luftdruckverzweiger verriegeln.

2. Sämaschine (10) nach Anspruch 1, **dadurch gekennzeichnet, dass** am äußeren Abschnitt (60) des Rohrs (52) ein mit dem Messsystem (18) verbundener Luftschlauch (34) befestigt ist.

3. Sämaschine (10) nach Anspruch 1 oder 2, **dadurch gekennzeichnet, dass** der Dichtungsring (56) zwischen der äußeren Oberfläche (78) des Luftdruckverzweigers und der inneren Oberfläche (62) des Flansches (54) eine luftdichte Dichtung bildet.

4. Sämaschine (10) nach einem der Ansprüche 1 bis 3, **dadurch gekennzeichnet, dass** der innere Abschnitt (58) des Rohrs (52) mit federnden, sich axial erstreckenden Zungen (68) ausgestattet ist, an denen die sich radial erstreckenden Klinken (66) angeordnet sind.

5. Sämaschine (10) nach einem der Ansprüche 1 bis 4, **dadurch gekennzeichnet, dass** die Klinken (66) eine Eingriffsoberfläche (70) aufweisen, die an der inneren Oberfläche (76) des Luftdruckverzweigers angreifen, und eine abgewinkelte, vorspannende Einführungsoberfläche (72), die die Klinken (66) nach innen vorspannt, wenn die Kupplung (50) in die Öffnung (80) des Luftdruckverzweigers eingeführt wird.

6. Sämaschine (10) nach einem der Ansprüche 1 bis 5, **dadurch gekennzeichnet, dass** das hohle Rohr (52) und der Flansch (54) einteilig und vorzugsweise aus Nylon hergestellt sind.

7. Sämaschine (10) nach einem der vorhergehenden Ansprüche, **dadurch gekennzeichnet, dass** die Luftpumpe (30) einen Über- oder Unterdruck erzeugt.

8. Sämaschine (10) nach einem der vorhergehenden Ansprüche, **dadurch gekennzeichnet, dass** der Luftdruckverzweiger durch den Werkzeugträger (12) gebildet wird.

9. Sämaschine (10) nach einem der vorhergehenden Ansprüche, **dadurch gekennzeichnet, dass** an der äußeren Oberfläche (64) des Flansches (54) ein Ring (54) befestigt ist, an dem eine Kappe (90) zum Abdecken des äußeren Abschnitts (60) befestigt ist.

## Claims

1. A seeding machine (10) comprising a toolbar (12) extending transversely to the direction of movement, a plurality of seeding units (14) being mounted to the toolbar (12), an air pump (30) pneumatically coupled to an air pressure manifold, which can in turn be coupled in an air pressure conducting manner to metering systems (18) of the seeding units (14) by means of a respective pneumatic coupling (50), the coupling (50) comprises a hollow tube (52) having an inner portion (58) and an outer portion (60), **characterized in that** between the inner portion (58) and the outer portion (60) a radially extending flange (54) is located, the flange (54) having an inner surface (62) facing the inner portion (58) and an outer surface (64) facing the outer portion (60), that the inner portion (58) of the tube (52) extends in the coupled state through an opening (80) of the air pressure manifold, whereby the outer portion (60) of the tube (52) can be pneumatically coupled with the metering system (18), that in the coupled state a resilient, compressible sealing ring (56) is located between the inner surface (62) of the flange (54) and the outer surface (78) of the air pressure manifold, and that the inner portion (58) of the tube (52) is provided with outwardly extending catches (66) engaging in the coupled state the interior surface (76) of the air pressure manifold and lock the pneumatic coupler (50) to the air pressure manifold.

2. A seeding machine (10) according to claim 1, **characterized in that** an air hose (34) connected to the metering system (18) is mounted to the outer portion (62) of the tube (52).

3. A seeding machine (10) according to claim 1 or 2, **characterized in that** the sealing ring (56) makes up an air tight seal between the outer surface (78) of the air pressure manifold and the inner surface (62) of the flange (54).

4. A seeding machine (10) according to one of claims 1 to 3, **characterized in that** the inner portion (58) of the tube (52) is provided with resilient, axially extending tongues (68) on which the radially extending catches (66) are located.

5. A seeding machine (10) according to one of claims 1 to 4, **characterized in that** the catches (66) have an engagement surface (70) engaging the interior surface (76) of the air pressure manifold, and an angled biasing insertion surface (72) biasing the catches (66) inwardly when the coupling (50) is inserted into the opening (80) of the air pressure manifold.

6. A seeding machine (10) according to one of claims 1 to 5, **characterized in that** the hollow tube (52) and the flange (54) are unitary and preferably manufactured of Nylon.

7. A seeding machine (10) according to one of claims 1 to 6, **characterized in that** the air pump (30) produces a positive or negative air pressure.

8. A seeding machine (10) according to one of the preceding claims, **characterized in that** the air pressure manifold is made up by the toolbar (12).

9. A seeding machine (10) according to one of the preceding claims, **characterized in that** a ring (54) is mounted to the outer surface (64) of the flange (54), to which a cap (90) for covering the outer portion (60) is mounted.

## Revendications

1. Semoir (10) comportant un porte-outil (12), orienté transversalement à la direction de déplacement et sur lequel est montée une pluralité d'éléments semeurs (14), une pompe à air (30), qui est couplée par voie pneumatique à un répartiteur d'air comprimé qui, pour le guidage de l'air comprimé, peut être couplé lui-même à des systèmes de dosage (18) des éléments semeurs (14) respectivement par l'intermédiaire d'un couplage (50) pneumatique, ledit couplage (50) étant formé par un tube (52) creux avec une partie intérieure (58) et une partie extérieure (60), **caractérisé en ce que** entre la partie intérieure (58) et la partie extérieure (60) du couplage (50) est agencé un collet (54), orienté dans le sens radial et muni d'une surface intérieure (62), qui est tournée vers la partie intérieure (58), et d'une surface extérieure (64), qui est tournée vers la partie extérieure (60), **en ce que** la partie intérieure (58) du tube (52) à l'état accouplé passe à travers un orifice (80) du répartiteur d'air comprimé, tandis que la partie extérieure (60) du tube (52) peut être reliée par voie pneumatique au système de dosage (18), **en ce que**, à l'état accouplé, une bague d'étanchéité (56) flexible, comprimable, est disposée entre la surface intérieure (62) du collet (54) et la surface extérieure (78) du répartiteur d'air comprimé, et **en ce que** la partie intérieure (58) du tube (52) est munie de loquets (66), qui s'étendent vers l'extérieur et qui, à l'état accouplé, entrent en prise avec la surface intérieure (76) du répartiteur d'air comprimé et verrouillent le couplage (50) sur le répartiteur d'air comprimé.

2. Semoir (10) selon la revendication 1, **caractérisé en ce qu'**un tuyau flexible d'air (34), relié au système de dosage (18), est fixé contre la partie extérieure (60) du tube (52).

3. Semoir (10) selon la revendication 1 ou 2, **caractérisé en ce que** la bague d'étanchéité (56) forme un joint étanche à l'air entre la surface extérieure (78) du répartiteur d'air comprimé et la surface intérieure (62) du collet (54).

4. Semoir (10) selon l'une quelconque des revendications 1 à 3, **caractérisé en ce que** la partie intérieure (58) du tube (52) est munie de languettes (68) flexibles, qui sont orientées dans le sens axial et sur lesquelles sont agencés les loquets (66) orientés dans le sens radial.

5. Semoir (10) selon l'une quelconque des revendications 1 à 4, **caractérisé en ce que** les loquets (66) comportent une surface de prise (70), qui entre en prise avec la surface intérieure (76) du répartiteur d'air comprimé, et une surface d'introduction (72) coudée et précontrainte par laquelle les loquets (66) sont précontraints vers l'intérieur lorsque le couplage (50) est introduit dans l'ouverture (80) du répartiteur d'air comprimé.

6. Semoir (10) selon l'une quelconque des revendications 1 à 5, **caractérisé en ce que** le tube (52) creux et le collet (54) sont réalisés d'un seul tenant et de préférence en nylon.

7. Semoir (10) selon l'une quelconque des revendications précédentes, **caractérisé en ce que** la pompe à air (30) génère une surpression ou une dépression.

8. Semoir (10) selon l'une quelconque des revendications précédentes, **caractérisé en ce que** le répartiteur d'air comprimé est formé par le porte-outil (12).

9. Semoir (10) selon l'une quelconque des revendications précédentes, **caractérisé en ce que** sur la surface extérieure (64) du collet (54) est fixée une bague (54), contre laquelle est fixé un capuchon (90) destiné à couvrir la partie extérieure (60).
